# EUROPEAN PATENT APPLICATION

(11) **EP 1 473 917 A1**
(43) Date of publication of application: **03.11.2004**
(21) Application number: 03291055.6
(22) Date of filing: 30.04.2003
(51) Int. Cl.: H04M 3/53

(54) **Fixed line multimedia messaging service without SMS notification**

(71) Applicant: Atlinks, 92100 Boulogne Billancourt (FR)
(72) Inventor: The designation of the inventor has not yet been filed
(74) Representative: Grynwald, Albert

(57) **Abstract**

The multimedia service for mobile telephony makes use of short message service (SMS) in order to notify (through a notification message) to recipient terminals that they can download a multimedia message or to inform the sender of a multimedia message that its message has been correctly received (read report).

However, the SMS technology is not well adapted to performing notification in fixed telephony because, up to now, there are relatively few networks and terminals which are equipped with devices authorising SMS.

The invention relates to a terminal for fixed telephony comprising:
means for receiving and/or transmitting multimedia messages according to the MMS standard,
means for receiving from a gateway server, through a conventional channel or line for fixed telephony, an identification number representing the gateway and an alert relating to a multimedia message, and
means for establishing, after reception of said identification number, a communication with the gateway server, this communication being according to HTTP over the internet protocol, said communication being for retrieving at a given location in said gateway server, an alert message relating to a MMS message, the given location identification in the gateway server being predetermined in the terminal.

So the goal of the invention is to provide a solution for alerting purposes relating to multi media messages in fixed telephony which is independent from short message service (SMS) and which provides maximum compatibility between MMS for mobile telephony and MMS for fixed telephony. "Alerting" means here any information provided to terminals which relates to multimedia messages. Notification and read report messages are such alerting messages.

## Description

The invention relates to a fixed line multimedia message system (F-MMS). It relates also to a terminal and a server for such system.

The transmission of multimedia messages through mobile telephones is a technology which is used more and more.

A multimedia message is a message with formatted text, images (still and/or animated), sounds and personal information management objects (such as calendars). In this kind of message the position and sequence of objects is controlled by a program embedded in this message. Roughly, a multimedia message is similar to a slide presentation.

The multimedia service (MMS) is standardised for mobile telephones. However, it is not yet standardised for fixed lined telephones. But, actors in the field of fixed telephones are pushing to catch up with mobile telephone systems in order to provide services similar to those of the mobile phones. In fact, multimedia service is quite attractive for fixed lines because fixed telephones may have more capabilities than mobile telephones such as a bigger screen and easier ways to amplify the sound.

In order to be able to adapt the multimedia service to fixed telephony, various problems have to be solved. More particularly the multimedia service for mobile telephony makes use of short message service (SMS) in order to notify (through a notification message) to recipient terminals that they can download a multimedia message or to inform the sender of a multimedia message that its message has been correctly received (read report).

However, the SMS technology is not well adapted to performing notification in fixed telephony because, up to now, there are relatively few networks and terminals which are equipped with devices authorising SMS.

Moreover, two different solutions and protocols are standardised for "fixed SMS". Therefore several families of SMS centres and terminals are available. This means that if SMS is used in conjunction with MMS, there will be a spread of standards which would not be favourable to the development of MMS because this would increase the cost of development of terminals and delay the availability of such terminals.

So the goal of the invention is to provide a solution for alerting purposes relating to multi media messages in fixed telephony which is independent from short message service (SMS) and which provides maximum compatibility between MMS for mobile telephony and MMS for fixed telephony. "Alerting" means here any information provided to terminals which relates to multimedia messages. Notification and read report messages are such alerting messages.

In fact, the invention is based on the recognition that if SMS was used, in fixed telephony, for terminal equipment alerting purposes, in relationship with multimedia service, there would be no extra service provided, since fixed MMS can be used to transport SMS data and this at the price of a greater complexity of the terminals, because the terminals should be compatible both with fixed SMS and fixed MMS. This increased complexity and increase of costs is also true for servers.

The invention is also based on the recognition that service providers willing to initiate a fixed multimedia service, if SMS was used for alerting, would have to reach interconnection agreements with SMS service providers or become SMS service providers. Here also this increase of complexity would not be favourable to the implementation of a fixed multimedia service.

According to a first aspect, the invention relates to a terminal for fixed telephony comprising:
means for receiving and/or transmitting multimedia messages according to the MMS standard,
means for receiving from a gateway server, through a conventional channel or line for fixed telephony, an identification number representing the gateway and an alert relating to a multimedia message, and
means for establishing, after reception of said identification number, a communication with the gateway server, this communication being according to HTTP over the internet protocol, said communication being for retrieving at a given location in said gateway server, an alert message relating to a MMS message, the given location identification in the gateway server being predetermined in the terminal.

In other words, according to the invention, the alert, which can be a notification of the reception of a MMS message, or a read report (i.e. a report, sent to the terminal which transmitted the MMS message, that this message was read by the recipient terminal), is initiated through a conventional fixed line call, and the communication continues according to the internet protocol with a gateway server receiving, from a conventional MMS server, the alerting messages. It is to be pointed out that this IP communication is facilitated by the predetermination, in the terminal, of the given location identification (i.e. the URI "Universal Resource Identifier", according to the IETF - Internet engineering task force - RFC 1630 or RFC 2396), or address for retrieving the alerting message in the gateway server.

In fact when, according to prior art technology, SMS is used for alerting, the SMS alerting message contains, among other parameters, the information about the location where to retrieve an alerting message or a MMS message in a relay server. But, when the alert is initiated by a conventional fixed line phone call, this location information cannot be transmitted in a user-based approach, because the conventional telephone protocol is different from the SMS protocol.

According to an embodiment the URI, for retrieval of alerting information in the gateway server, is in a permanent memory of the terminal.

For instance, this URI is installed in the factory manufacturing the terminal. In another example the terminal has means for enabling the user to store in memory this URI. According to another embodiment, the terminal has means to receive this URI through a telephone call and to store it in memory.

In a preferred embodiment, which is particularly simple to realize, the identification number representing the gateway server is according to the calling line identification (CLI), i.e. it represents a telephone number, or E.164 number, of the gateway server.

In that case the identification number is received through a conventional phone call. Moreover, in an embodiment, the gateway server has means to stop the phone call after a time sufficient for the terminal to recognize the signalling received from the gateway server.

According to an embodiment, which has the advantage of simplicity for the terminal, the gateway server is such that it provides a single telephone number independent from the nature of the alert.

In another embodiment the gateway server is such that it provides telephone numbers, or other identifiers, which depend on the nature of the alert, for instance one for the notification of reception of a MMS message and another one for a read report, and the terminal has means for recognizing the nature of the alert in view of the numbers or identifiers. The different identifiers or numbers can be a name associated to the gateway server or a complementary calling line.

When the calling numbers of the gateway server differ according to the nature of the alert, these different numbers can be used by the terminal to establish the IP communication with the gateway server. It is also possible to use a single telephone number, and the differentiation is made through URI.

The terminal is either a dedicated telephone terminal device or a personal computer (PC) comprising a modem, preferably with a calling line identification feature. In other words, the invention provides means to convert a PC into a fixed line MMS terminal.

The interrogating internet type communication between the terminal and the gateway server may be established immediately after the reception of the identification number from the gateway server, or on a deferred basis, or periodically.

Therefore, the terminal comprises, in an embodiment, means for establishing this interrogating IP communication immediately after reception of said identification number, and/or means for establishing this communication periodically and/or after a predetermined delay.

In case of a permanent IP connection between the terminal and the relay server, the telephone call from the relay server to the terminal is useful to trigger an interrogation from the terminal to the relay server because HTTP OVER IP is a server-client communication, i.e. the server can respond only if it is requested to provide information, i.e. it cannot provide information by itself.

The IP communication between the terminal and the gateway server uses preferably MMS Protocol data units (PDU), i.e. PDUs already defined for MMS transactions.

For instance HTTP Response (a response according to Internet HTTP Protocol) will embed either M-Notification.Ind PDU or Read-Originator-Ind according to OMA specification for MMS encapsulation protocol and ETSI TS 123.140.

For instance also, when alerting refers to Notification, upon receiving M-Notification.Ind PDU, the terminal recipient will invoke an HTTP POST operation with an M-NotifyResp.ind PDU, according to OMA specification for MMS encapsulation protocol and ETSI TS 123.140.

According to a further embodiment, the terminal has means to check whether additional alert messages are pending after a download of an alert message. For this purpose, the terminal may comprise means to generate a new request through a new HTTP-GET after a HTTP-GET generated for downloading the alerting message, and means to receive an empty or error response message in case no more messages are in the queue.

The invention relates also to a gateway server for fixed MMS telephony.

This gateway server comprises means for receiving and/or transmitting multimedia messages from a MMS relay server, these multimedia messages being according to the MMS standard and the connection between the MMS relay server and the gateway being according to the Internet or another Protocol,
means for receiving from, or for transmitting to, terminals, alerting messages relating to multimedia messages according to the MMS standard, this connection for transmission and/or reception being according to the Internet Protocol,
means for establishing, after reception, from the MMS relay server, of an alert relating to a multimedia message for a given terminal, a communication, through a conventional channel or line for fixed telephony, with the given terminal in order to forward to this terminal an identification number representing said gateway and an alert relating to a multimedia message, and
means for establishing the Internet Protocol communication with the terminal after the communication through the conventional channel or line for fixed telephony.

In an embodiment the identification number transmitted to the terminal through a conventional channel or line for fixed telephony is a calling line identification, more particularly a E.164 number.

In that case, the server may comprise means to stop the phone call from said server to the terminal after a time sufficient for the terminal to recognize the signalling received from the server.

In an embodiment, the gateway server has means to provide to the terminal a single identification number, independent from the nature of the alert.

In an other embodiment, the server comprises means to forward, through the conventional channel or line for fixed telephony, identification numbers which depend on the nature of the alert.

The server may be incorporated in a relay server in a MMS gateway server for fixed telephony.

The invention relates further to a method for informing a terminal for fixed telephony, and which is able to receive and/or transmit multimedia messages according to the MMS standard, that an alert is available concerning a MMS message relating to this terminal.

This method comprises the steps of:
providing a gateway server connected to a MMS relay server in order to receive from this relay server, or to transmit to this relay server, multimedia messages alert messages through an Internet Protocol connection,
connecting this gateway server to a given terminal after reception from the relay server, of an alert message relating to a multimedia message, this connection being made through a channel or line according to fixed telephony in order to forward an identification number to the given terminal,
establishing an Internet Protocol Communication between the given terminal and the gateway server after reception, by the terminal, of the identification number, this communication comprising the transmission, by the given terminal, of a given location identification in the gateway server for retrieving an alert message relating to the MMS message.

The given location identification may be a URI "Universal Resource Identifier" according to the Internet Protocol.

In an embodiment, the identification number sent by the gateway server to the given terminal is a calling line identification, comprising a E.164 number. In that case, the communication for transmitting the identification number from the gateway server to the given terminal may be a signalling communication without voice communication.

According to an embodiment, the gateway server transmits to the given terminal, during the communication on a channel or line for fixed telephony, an identification number representing the nature of the alert.

The alerting messages may be comprised in the group including notification and read report messages.

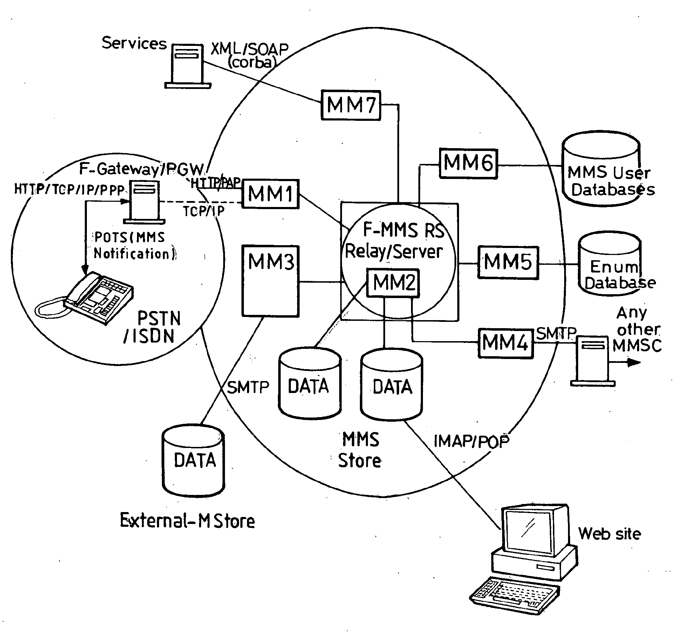

Other features and advantages of the invention will appear with the description of certain of its embodiments, this description being made in connection with the herein drawings wherein figure 1 represents the architecture of a F-MMS service network according to the invention.

F-MMS service uses (figure 1) a server (F-MMS RS) to store and forward multimedia messages. The term Multimedia Message is used here with the same meaning as in 3GPP context. In this respect reference is made to the standard for mobile telephony 3GPP TS 23.140 V5.3.0 (2002-06): "3rd Generation Partnership Project; Technical Specification Group Terminals; Multimedia Messaging Service (MMS); Functional description; Stage 2 (Release 5)".

Between user and F-MMS RS a F-MMS Gateway is provided which grants Terminal equipment access to the Service and acts as a Proxy server for security.

In the present invention, this gateway, noted F-Gateway/PGW has specific functions which will be described later. For clarity purpose the known elements and their functions will be described first.

Interface between User Agent (User Terminal Equipment) and F-MMS RS is known as MM1. The other elements associated to F-MMS RS on figure 1 are conventional and it is not necessary to describe them with details.

For a multimedia message submission (transmission), as shown on table 2 below, the originating user (MMTE-O or TE-O) composes the message, and starts a PPP (point to point protocol, according to internet protocol) session with the F-MMS gateway. Both CLI and IP address are used as identifiers for the TE-O. A Send Request command (HTTP "POST") is used to upload the message to RS. The gateway proxies this request to the relay server. The TE-O is confirmed the correct reception of message in the relay server via a Send Response (HTTP RESP). Afterwards the PPP session is terminated.

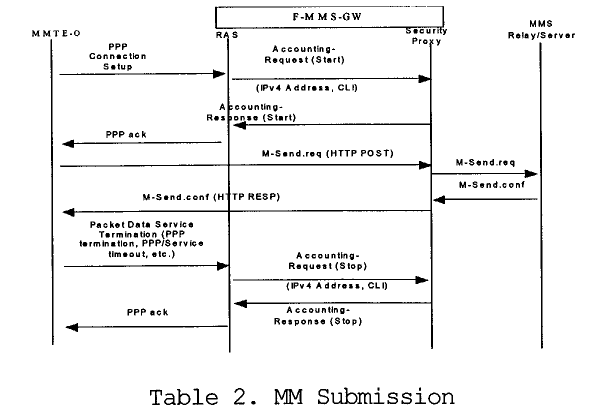

Recipient Terminal Equipment (MMTE-R or TE-R) is alerted about a new message waiting to be retrieved in the F-MMS-RS. Upon receiving the Notification Request, the TE-R shall acknowledge the successful reception to the return server. Parameters are conveyed to the recipient during this phase to allow later retrieval: MMS URI, transaction identifier, etc.

Retrieval can be automatic, deferred or on user's request.

For retrieval (Table 3 below), the TE-R starts a PPP session with the F-MMS GW. A Retrieve Request command ( HTTP GET) is used to download the message. This command shall include the URI (i.e. the location) of the message to be downloaded. The gateway proxies this request to the relay server. The MMS message is transferred within a Retrieve Response (HTTP RESP). The TE-R may Acknowledge correct Reception if requested by the relay server. Afterwards, the PPP session is terminated.

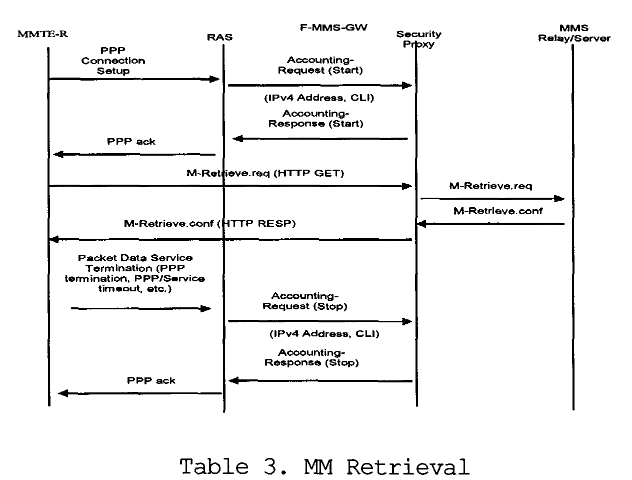

After successful download, if the originating user requested so, a Read Report message will be sent to this user.

Also in order to better understand the invention, the prior art notification through SMS is described hereinbelow with Table 4.

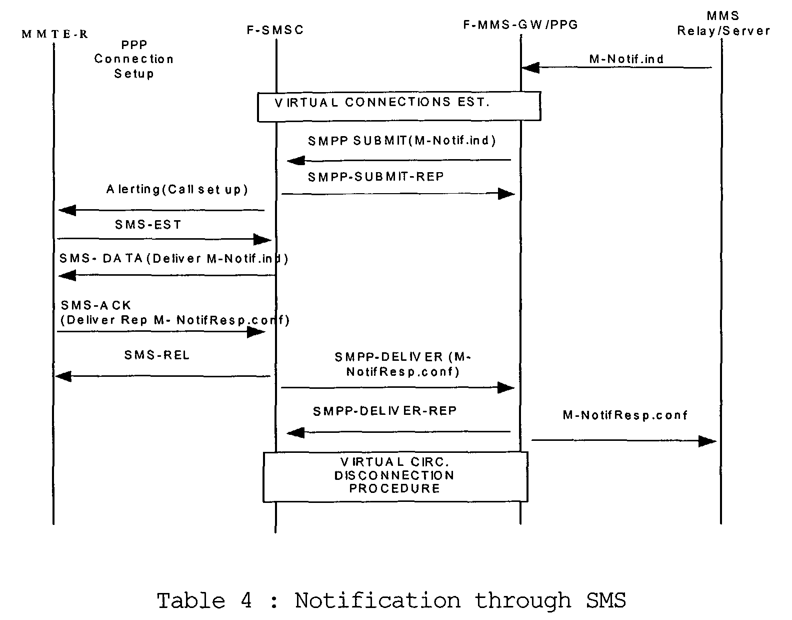

In this table F-SMSC is a centre or server for SMS applied to fixed telephony.

As shown an IP connection is established as soon as the F-MMS gateway server receives a PDU (Protocol Data Unit) M-Notif.ind from the MMS relay server.

With the invention, which avoids the use of SMS, the gateway server and the terminal include specific features.

Table 5 below shows the notification method according to the invention with the gateway server or push gateway PGW according to the invention.

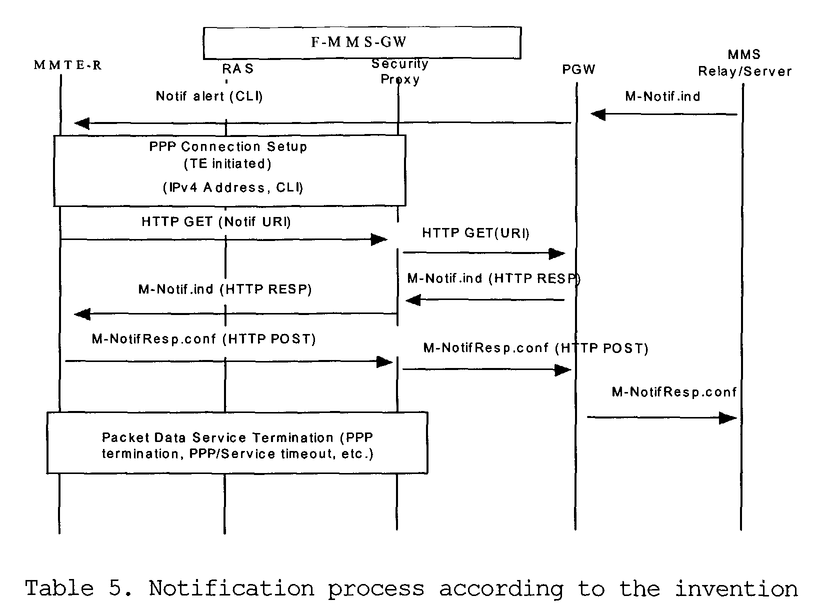

More precisely, according to the invention, a gateway server PGW is installed between the MMS relay server and the F-MMS-Gateway. It can be also a part of either the MMS relay server or the F-MMS-gateway.

The goal of this gateway server PGW (or push gateway) which is an HTTP server, is to relay alerting messages (notification messages in the example of Table 5) to the terminals without using SMS.

This PGW is connected to the MMS relay server through the internet or another_protocol or (as mentioned) can be a part of the relay server or of the F-MMS gateway. When this PGW receives the PDU M-notif.ind for a given terminal receiver MMTE-R, it establishes a telephone communication with this MMTE-R.

This means that the PGW server transmits its Calling Line identification (CLI). More particularly, the PGW E.164 number is transported in the CLI information. It is recalled here that CLI service is defined by the ETSI standard ETS 300 659-1-2-3.

This phone call made by the PGW server towards the MMTE-R is limited to the signalling phase, i.e. no voice circuit is established because the call is stopped, by PGW, after a few seconds.

In the path between PGW and MMTE-R, two servers are provided, i.e. RAS, which is a register access server and a security proxy. Both servers, which have been already mentioned earlier, are conventional and it is not necessary to describe them in details.

The recipient of the notification alert recognizes this call as being an alert for a message received through the PGW server, i.e. a message about a MMS.

After reception of this alert, MMTE-R establishes an internet protocol connection and sends towards the PGW Server an HTTP GET with a default URI corresponding to the location of the alerting message in the PGW Server. As mentioned above, the default URI is either installed in factory or by the user of the terminal or provided by the CLI received from the PGW Server.

As already known HTTP GET is, in the internet protocol, a command for a request of content.

In response to this request, the PGW Server forwards, through the internet connection, the content of the alerting message i.e. the PDU M-Notif.ind, as the body of an HTTP response (HTTP RESP) according to the internet protocol.

After receiving the alerting message M-Notif.ind, the terminal acknowledges the reception by forwarding the PDU M-Notif Resp.conf within a command HTTP POST according to the internet protocol. This PDU received by the PGW Server is forwarded to the MMS relay server.

Afterwards the retrieval of the pending MMS message may be delayed a certain time or wait for user action or it may be immediately performed.

The first case (delay) is shown on Table 5 wherein it appears that the IP connection is interrupted after sending the M-notif resp.conf by the MMTE-R.

The second possibility appears on Table 6 below which differs only from Table 5 by the fact that after sending M-Notif Resp.Conf, the terminal MMTE-R sends, through the internet protocol session, the command M-Retrieve.req which is a HTTP GET command. This command is forwarded to the MMS relay server. In response, the MMS relay server sends an acknowledgement M-Retrieve.conf which is a HTTP response.

After reception of this message, the internet connection of MMTE-R terminal is interrupted.

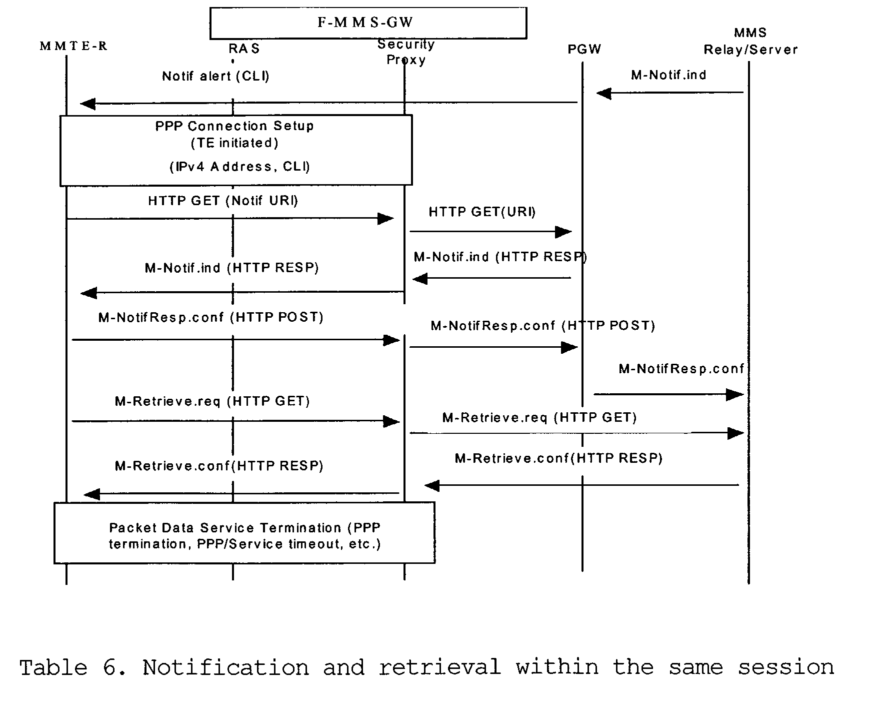

## Claims

1. A terminal for fixed telephony comprising:
means for receiving and/or transmitting multimedia messages according to the MMS standard,
means for receiving from a gateway server, through a conventional channel or line for fixed telephony, an identification number representing the gateway and an alert relating to a multimedia message, and
means for establishing, after reception of said identification number, a communication with the gateway server, this communication being according to HTTP over the internet protocol, said communication being for retrieving at a given location in said gateway server, an alert message relating to a MMS message, the given location identification in the gateway server being predetermined in the terminal.

2. A terminal according to claim 1 wherein the given location identification in the gateway server is a URI "Universal Resource Identifier".

3. A terminal according to claim 1 or 2 wherein the given location identification in the gateway server is in a permanent memory of the terminal.

4. A terminal according to any of claims 1, 2 or 3 wherein the identification number representing the gateway server is a calling line identification such as a E.164 number.

5. A terminal according to any of the previous claims comprising means for receiving different identifiers from the gateway server and means for recognizing the nature of the alert in view of the identifiers.

6. A terminal according to claim 5 comprising means to establish the HTTP over IP communication with the gateway server through the use of a given location identification representing the nature of the alert.

7. A terminal according to any of the previous claims comprising means for establishing the HTTP over IP communication with the gateway server immediately after reception of the identification number representing the gateway server, and/or means for establishing this IP communication after a predetermined delay.

8. A terminal according to claim 1 comprising means for establishing a permanent Internet Protocol Communication with the gateway server and means for interrogating periodically the gateway server through HTPP over IP.

9. A terminal according to any of the previous claims comprising means to generate a request for downloading an alerting message after reception of a first alerting message.

10. A gateway server for fixed telephony comprising
means for receiving and/or transmitting multimedia messages from a MMS relay server, these multimedia messages being according to the MMS standard and the connection between the MMS relay server and the gateway being according to the Internet or another Protocol,
means for receiving from, or for transmitting to, terminals, alerting messages relating to multimedia messages according to the MMS standard, this connection for transmission and/or reception being according to the Internet Protocol,
means for establishing, after reception, from the MMS relay server, of an alert relating to a multimedia message for a given terminal, a communication, through a conventional channel or line for fixed telephony, with the given terminal in order to forward to this terminal an identification number representing said gateway and an alert relating to a multimedia message, and
means for establishing the Internet Protocol communication with the terminal after the communication through the conventional channel or line for fixed telephony.

11. A server according to claim 10 wherein the identification number transmitted to the terminal through a conventional channel or line for fixed telephony is a calling line identification, more particularly a E.164 number.

12. A server according to claim 11 comprising means to stop the phone call from said server to the terminal after a time sufficient for the terminal to recognize the signalling received from the server.

13. A server according to claim 10, 11 or 12 wherein the gateway server has means to provide to the terminal a single identification number, independent from the nature of the alert.

14. A server according to claim 10, 11 or 12 comprising means to forward, through the conventional channel or line for fixed telephony, identification numbers which depend on the nature of the alert.

15. A server according to any of the claims 10 to 14 incorporated in a relay server.

16. A server according to any of claims 10 to 14 incorporated in a MMS gateway server for fixed telephony.

17. A method for informing a terminal for fixed telephony which is able to receive and/or transmit multimedia messages according to the MMS standard, that an alert is available concerning a MMS message relating to this terminal, the method comprising the steps of :
providing a gateway server connected to a MMS relay server in order to receive from this relay server, or to transmit to this relay server, multimedia messages alert messages through an Internet Protocol connection,
connecting this gateway server to a given terminal after reception from the relay server, of an alert message relating to a multimedia message, this connection being made through a channel or line according to fixed telephony in order to forward an identification number to the given terminal,
establishing an Internet Protocol Communication between the given terminal and the gateway server after reception, by the terminal, of the identification number, this communication comprising the transmission, by the given terminal, of a given location identification in the gateway server for retrieving an alert message relating to the MMS message.

18. A method according to claim 17 wherein the given location identification is a URI "Universal Resource Identifier".

19. A method according to claim 17 or 18 wherein the identification number sent by the gateway server to the given terminal is a calling line identification, comprising a E.164 number.

20. A method according to claim 19 wherein the communication for transmitting the identification number from the gateway server to the given terminal is a signalling communication without voice communication.

21. A method according to any of claims 17 to 20 wherein the gateway server transmits to the given terminal, during the communication on a channel or line for fixed telephony, an identification number representing the nature of the alert.

22. A method according to any of claims 17 to 21 wherein the alerting messages are comprised in the group including notification and read report messages.
